# EUROPEAN PATENT APPLICATION

(11) **EP 4 801 130 A1**
(43) Date of publication of application: **02.09.2026**
(21) Application number: 23956856.1
(22) Date of filing: 27.10.2023
(51) Int. Cl.: H04W 56/00

(54) **TERMINAL, WIRELESS COMMUNICATION METHOD, AND BASE STATION**

(71) Applicant: NTT DOCOMO, INC., Tokyo 100-6150 (JP)
(72) Inventor: TAKEDA, Daiki, Tokyo 100-6150 (JP); HIRANO, Rio, Tokyo 100-6150 (JP); KURITA, Daisuke, Tokyo 100-6150 (JP); SHICHIJO, Taichi, Tokyo 100-6150 (JP)
(74) Representative: Hoffmann Eitle
(86) International application number: PCT/JP2023/038943
(87) International publication number: WO 2025/088806

(57) **Abstract**

A terminal according to one aspect of the present disclosure includes: a receiving section that receives control information for determining timing advance; and a control section that determines the timing advance, based on measurement information measured by the terminal.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In existing radio communication systems (for example, NR), a terminal (user terminal, User Equipment (UE)) is instructed to use timing advance (TA), and adjusts the transmission timing of an uplink (UL) signal based on the TA.

However, UL signal transmission needs a TA command, which affects signaling overhead and power consumption.

In view of this, one object of the present disclosure is to provide a terminal, a radio communication method, and a base station that reduce instructions related to TA.

### Solution to Problem

A terminal according to one aspect of the present disclosure includes: a receiving section that receives control information for determining TA; and a control section that determines the timing advance, based on measurement information measured by the terminal.

### Advantageous Effects of Invention

According to an aspect of the present disclosure, instructions related to TA can be reduced.

### Brief Description of Drawings

[FIG. 1] FIG. 1 is a diagram illustrating an example of a timing advance group (TAG) to which cells included in a cell group belong.
[FIG. 2] FIG. 2 is a diagram illustrating an example of a MAC CE for a timing advance command.
[FIG. 3] FIG. 3 is a diagram illustrating another example of a MAC CE for a timing advance command.
[FIG. 4] FIG. 4 is a diagram illustrating an example of a framework for managing an AI model.
[FIG. 5] FIG. 5 is a diagram illustrating an example of a method for generating an inference model.
[FIG. 6] FIGS. 6A and 6B are diagrams each illustrating an example of a system configuration.
[FIG. 7] FIG. 7 is a diagram illustrating an example of the schematic configuration of a radio communication system according to an embodiment.
[FIG. 8] FIG. 8 is a diagram illustrating an example of the configuration of a base station according to an embodiment.
[FIG. 9] FIG. 9 is a diagram illustrating an example of the configuration of a user terminal according to an embodiment.
[FIG. 10] FIG. 10 is a diagram illustrating an example of the hardware configuration of a base station and a user terminal according to an embodiment.
[FIG. 11] FIG. 11 is a diagram illustrating an example of a vehicle according to an embodiment.

### Description of Embodiments

### (Timing Advance)

When uplink (UL) reception timings from a plurality of UEs differ significantly in a base station (BS, network, NW), the BS cannot maintain the orthogonality between symbols, which causes interference. Therefore, timing advance (TA) control for adjusting the UL transmission timing is necessary on a UE side. For example, in an existing TA control method, the BS measures an appropriate TA value using a PRACH transmitted from the UE, and instructs the UE on the TA value to be used.

### (Timing Advance Group)

In a case where a plurality of TRPs is used, a case also arises in which a UE and each of the TRPs have a different distance. The plurality of TRPs may be included in the same cell (a serving cell, for example). Alternatively, a given TRP of the plurality of TRPs may correspond to a serving cell while the other TRPs may each correspond to a non-serving cell. In this case, it is also assumed that each of the TRPs and the UE have a different distance.

In an existing system, a transmission timing of a UL (Uplink) channel and/or UL signal (UL channel/signal) is adjusted by timing advance (TA). Reception timings of UL channels/signals from different user terminals (UEs) is adjusted on the radio base station (also referred to as TRP (Transmission and Reception Point), gNB (gNodeB), and the like) side.

The UE may use timing advance, for each timing advance group (TAG) configured in advance (multiple timing advances), to perform timing control for UL transmission.

In a case where the multiple timing advances are employed, TAGs categorized according to transmission timing are supported. The UE may assume that the same TA offset (or TA value) is used for each TAG, to control UL transmission timing for each TAG. That is, the TA offset may be configured independently for each TAG.

In a case of employing the multiple timing advances, the UE adjusts the transmission timing independently for cells belonging to each TAG, and thereby, uplink signal reception timing from the UE can be timed at a radio base station even when a plurality of cells is used.

A TAG (for example, serving cells belonging to the same TAG) may be configured by a higher layer parameter. For the serving cells belonging to the same TAG (for example, serving cells for which a UL is configured), the same timing advance value may be used. A timing advance group including an SpCell of a MAC entity may be referred to as a primary timing advance group (PTAG), and other TAGs may be referred to as secondary timing advance groups (STAGs). The maximum number of TAGs may be X (X=4, for example) for each cell group (MCG/SCG, for example).

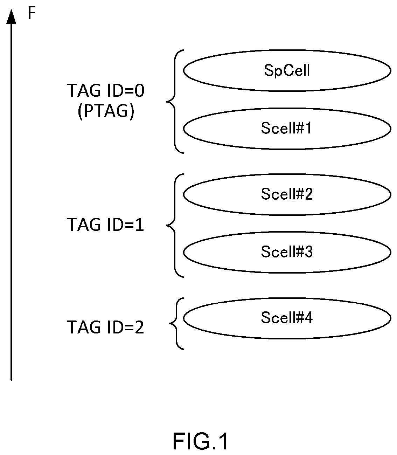

In an existing system (for example, Rel-16 NR), configuration of four TAGs at maximum for each cell group (for example, MCG/SCG) is supported. In the example of TAG of FIG. 1, a case is illustrated in which three TAGs are configured for a cell group including an SpCell and SCells #1 to #4. Here, the SpCell and SCell #1 belong to a first TAG (PTAG or TAG #0), SCell #2 and SCell #3 belong to a second TAG (TAG #1), and SCell #4 belongs to a third TAG (TAG #2).

The UE may be notified of a timing advance command (TA command) by using a MAC control element (for example, a MAC CE). The TA command is a command indicating an uplink channel transmission timing value and is included in the MAC control element. The TA command (TAC) is signaled from the radio base station to the UE at a MAC layer. The UE controls a given timer (for example, a TA timer) based on reception of the TA command.

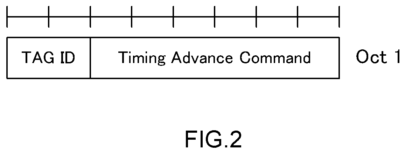

FIG. 2 is a diagram illustrating a first example of a MAC CE for a timing advance command. The MAC CE of the first example may include a field for a timing advance group index (for example, TAG ID) and a field for a timing advance command. The MAC CE may be constituted of one octet (= 8 bits).

The field for TAG ID (TAG ID field) may be constituted of 2 bits, for example. The TAG ID field may be used to indicate the TAG ID of the addressed TAG. The field for a timing advance command (TAC field) may be constituted of 6 bits, for example. The TAC field may indicate an index value T_{A} (0, 1, 2 ..., 63) that is used to control the amount/value (relative amount/value) of timing adjustment that the MAC entity has to apply. The MAC CE for a timing advance command of the first example may be called TAC MAC CE.

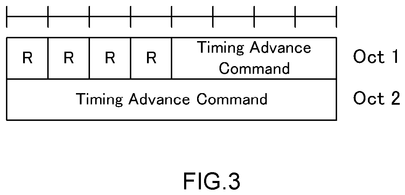

FIG. 3 is a diagram illustrating a second example of a MAC CE for a timing advance command. The MAC CE of the second example may be called an absolute TAC MAC CE. The MAC CE may be constituted of two octets (=16 bits). Specifically, the MAC CE may include a field for reserved bits (R bit field) and a field for a timing advance command (TAC field). The R bit field (R=0) may be constituted of, for example, 4 bits. The TAC field may be constituted of, for example, 12 bits across two octets. The TAC field of the second example may indicate an index value used to control the amount/value (absolute amount/value) of the actual TA that the MAC entity has to apply, as with the first example. In addition, it is possible that the absolute TAC MAC CE does not include the TAG ID field of the first example.

The MAC CE of the first example may be used after initial access is established. On the other hand, the MAC CE of the second example is used only at the time of initial access and may be included in an RAR, and the like. Each field included in the MAC CE for the timing advance command described above may be called a field related to TA. Among them, the TAC field in the first example may be called a TA adjustment field/field for instructing TA adjustment/field related to TA adjustment, and the TAC field in the second example may be called an absolute TAC field/field for instructing absolute TAC.

### (Uplink Time Alignment Maintenance)

Parameters such as a time alignment timer (for example, timeAlignmentTimer) may be configured for maintaining /Maintenance of Uplink Time Alignment. The time alignment timer (per TAG) may control the time at which the MAC entity regards the serving cells belonging to the associated TAG as UL time aligned.

Parameters corresponding to each TAG ID may be configured by higher layer parameters. For example, parameters such as a time alignment timer (for example, timeAlignmentTimer) corresponding to each TAG ID may be configured. Alternatively, the TAG ID for each serving cell may be configured by higher layer parameters (for example, tag-ID included in ServingCellConfig). Note that, after the configuration by higher layer parameters, the TAG ID/parameters may be updated by the MAC CE.

The time alignment timer may be maintained for UL time alignment. In Rel. 17, the time alignment timer may be configured/associated per TAG. When receiving a MAC CE for a timing advance command (for example, TAC MAC CE), the UE starts or resumes (restarts) the time alignment timer associated with the indicated timing advance group (for example, TAG).

In a case where the MAC CE for a timing advance command is received and further a given value (N_{TA}) is maintained with the indicated TAG, the MAC entity applies the timing advance command for the indicated TAG, or, starts or reboots (restarts) the time alignment timer associated with the indicated TAG. The given value (N_{TA}) may be the timing advance between DL and UL.

In a case where a timing advance command is received in an RAR message for a serving cell belonging to a TAG (for example, a TAG of an SpCell) or in a message B (for example, MSGB) for the SpCell, if the MAC entity does not select a random access preamble from among collision-based random access preambles, it may apply the timing advance command for that TAG and may also start or restart the time alignment timer associated with that TAG.

If an absolute timing advance command (for example, Absolute Timing Advance Command) is received in response to transmission of a message A containing a given RNTI MAC CE (for example, C-RNTI MAC CE) (for example, MSGA), a timing advance command for PTAG may be applied.

Operation when the time alignment timer has expired may be defined separately for each of a PTAG and a STAG. Note that a timing advance group (TAG) including an SpCell of a MAC entity may be referred to as a primary timing advance group (PTAG), and the other TAGs may be referred to as secondary timing advance groups (STAGs).

For example, in Rel. 17, it is supported that a given operation for PTAG is employed when a timing advance timer corresponding to a PTAG has expired and a given operation for STAG is employed when a timing advance timer corresponding to an STAG has expired.

For example, when a time alignment timer has expired, the following operations (for example, given operation for PTAG/given operation for STAG) may be performed.

### [Given Operation for PTAG]

When the time alignment timer is associated with a PTAG,
- flash all the HARQ buffers of all serving cells
- if configured, notify RRC so as to release a PUCCH for all the serving cells
- if configured, notify RRC so as to release an SRS
- clear all configured DL allocation and all configured UL allocation
- clear PUSCH resources for semi-persistent CSI reporting
- make all running time alignment timers expired
- maintain N_{TA} of all the TAGs

### [Given Operation for STAG]

When the time alignment timer is associated with an STAG, for all the serving cells belonging to the TAG,
- flash all the HARQ buffers
- if configured, notify RRC so as to release a PUCCH
- if configured, notify RRC so as to release an SRS
- clear all configured DL allocation and all UL allocation
- clear PUSCH resources for semi-persistent CSI reporting
- maintain N_{TA} of the TAG

### (TA Acquisition)

It is also possible that the UE performs UL transmission of a candidate cell while taking into account a TA corresponding to the candidate cell. When taking into account the TA of the candidate cell, the UE needs to acquire the TA of the candidate cell (for example, TA acquisition of candidate cells).

As the TA acquisition of candidate cells, a plurality of TA acquisition methods are possible, such as TA acquisition using RACH (for example, RACH-based solutions) and TA acquisition without using RACH (RACH-less solutions). For the TA acquisition using RACH, a method with RAR monitoring and a method without RAR monitoring may be supported. A TA acquisition method may be interpreted as a TA acquisition scheme, a TA acquisition type, or a TA acquisition procedure. In the present disclosure, TA acquisition, TA measurement, TA calculation, TA calculation, and TA determination may be interchangeably interpreted.

For example, the UE may acquire the TA of the candidate cell by transmitting RACH (for example, a PDCCH ordered RACH) indicated/triggered by a PDCCH to the candidate cell. Information about the TA of the candidate cell (for example, a TA value) may be included in a response signal (for example, an RAR) of the RACH. The RAR may be transmitted from the serving cell or the candidate cell. Alternatively, the TA of the candidate cell may be acquired using a RACH triggered by the UE or a RACH triggered at higher layers by the network. The PDCCH order may be triggered only by a source cell (or serving cell).

Alternatively, the UE may acquire the TA of the candidate cell by transmitting a signal other than the RACH to the candidate cell. Information about the TA of the candidate cell (for example, the TA value) may be instructed to the UE from the base station. For example, SRS may be applied as a signal other than RACH (for example, SRS-based TA measurement).

Alternatively, the UE may measure/calculate/acquire the TA for the candidate cell based on a DL signal (for example, a downlink reference signal) transmitted from each cell (for example, candidate cell/serving cell). A method in which the UE acquires the TA for the candidate cell based on the DL signals transmitted from one or more cells may be called UE-based TA measurement, for example.

In the UE-based TA measurement, the downlink reference signal may be a given DL signal (for example, a synchronization signal block (for example, SSB)/CSI-RS, and the like). For example, the UE may measure the discrepancy/difference in reception timing of DL signals from a plurality of cells (or two cells) and acquire the TA of the candidate cell.

The plurality of cells may include a reference cell (for example, a serving cell). In this case, the UE may calculate the TA required for the candidate cell based on the reception timing of the reference cell (and the TA value of the reference cell) and the timing difference (for example, T) between the reference cell and the candidate cell. The UE may acquire the TA of the candidate cell using a timing advance command (TAC) transmitted from the serving cell.

The source cell may transmit information about the configuration of the candidate cell (for example, candidate cell configuration information) to the UE. The information about the configuration of the candidate cell may be configured by a given higher layer parameter (for example, LTM-CandidateConfig). The information about the configuration of the candidate cell may include information about TA acquisition applied to each of the candidate cells. For example, the information about the configuration of the candidate cell may include information about the candidate cell for which the UE-based TA measurement is configured.

The source cell may transmit, to the UE, information/signaling to trigger/instruct a UE-based TA measurement. The UE-based TA measurement may be triggered by MAC CE/DCI.

When receiving the information/signaling to trigger/instruct the UE-based TA measurement, the UE may measure the discrepancy/difference in reception timing of DL signals from a plurality of cells (or two cells) and acquire the TA of the candidate cell. For example, the UE may measure/calculate the discrepancy/difference in reception timing of DL signals between the reference cell and the candidate cell. Information regarding the reference cell/candidate cell may be instructed to the UE. As an example, the reference cell may be the source cell (or serving cell).

If the reference cell (for example, source cell/serving cell/specific candidate cell) and the candidate cell are asynchronous, the UE may apply a given offset parameter in acquiring a TA between the reference cell and the candidate cell. The given offset parameter may be configured in the UE by a higher layer configuration (for example, RRC configuration).

Note that it is possible for the source cell not to transmit, to the UE, the information/signaling to trigger/instruct the UE-based TA measurement. In this case, the UE may perform the UE-based TA measurement autonomously based on a higher layer parameter for instructing the configuration of the UE-based TA measurement.

When acquiring the TA based on the UE-based TA measurement, the UE may transmit given signaling (or information) to the source cell (or reference cell)/target cell (or candidate cell).

The given signaling (or information) may be applied to determine/notify the reliability (or effectiveness/validity) of the TA acquired through the UE-based TA measurement. For example, in a case where the effectiveness of the TA acquired through the UE-based TA measurement is determined based on other conditions/rules, the reliability of the TA (or whether it is effective or not) may be notified by the given signaling (or information).

The UE/network (or base station) may determine/notify the reliability (or effectiveness/validity) of the TA acquired through the UE-based TA measurement based on the given signaling. The given signaling (or information) may be transmitted using MAC CE/UCI/PUCCH/PUSCH.

Note that the configuration is possible in which the given signaling (or information) is not transmitted.

Then, the source cell may transmit a cell switching command to the UE. In addition, TA information (for example, information about the effectiveness/validity of the TA acquired through the UE-based TA measurement) may be moved/notified from the source cell to the target cell. After cell switching, the UE may control UL transmission based on the TA acquired through the UE-based TA measurement through which the TA is determined to be effective/valid.

### (Application of Artificial Intelligence (AI) Technology to Radio Communication)

For future radio communication technologies, the utilization of AI technologies such as machine learning (ML) for network/device control and management is under consideration.

For example, it is under consideration to apply AI technologies to a terminal (user terminal, User Equipment (UE))/base station (BS) for purposes of improving channel state information (CSI) feedback (for example, overhead reduction, accuracy improvement, prediction), improving beam management (for example, accuracy improvement, prediction in time/space domain), and improving position measurement (for example, improvement in position estimation/prediction).

An AI model may output at least one piece of information such as an estimated value, a predicted value, a selected action, and a classification based on input information. The UE/BS may input, to the AI model, channel state information, a reference signal measurement value, and so on, and output high-accuracy channel state information/measurement value/beam selection/position, future channel state information/radio link quality, and so on.

Note that, in the present disclosure, the AI may be interpreted as an object (also called a target, entity, data, function, program, and so on) including (implementing) at least one of the following characteristics:
- Estimation based on observed or collected information;
- Selection based on observed or collected information; and
- Prediction based on observed or collected information.

In the present disclosure, terms such as estimation, prediction, and inference may be interchangeably interpreted. In the present disclosure, terms such as estimate, predict, and infer may be interchangeably interpreted.

In the present disclosure, an object may be an apparatus or device such as a UE and BS, for example. In the present disclosure, an object may correspond to a program/model/entity that operates in the apparatus.

In the present disclosure, the AI model may be interpreted as an object including (implementing) at least one of the following characteristics:
- Producing an estimated value by being fed information;
- Predicting an estimated value by being fed information;
- Discovering a feature by being fed information; and
- Selecting an action by being fed information.

In the present disclosure, the AI model may mean a data-driven algorithm that applies AI technologies to generate a set of outputs based on a set of inputs.

In the present disclosure, an AI model, model, ML model, predictive analytics, predictive-analytic model, tool, autoencoder, encoder, decoder, neural network model, AI algorithm, scheme, and so on may be interchangeably interpreted. The AI model may be derived by using at least one of regression analysis (for example, linear regression analysis, multiple regression analysis, logistic regression analysis), support vector machine, random forest, neural network, and deep learning.

In the present disclosure, a method for training the AI model may include supervised learning, unsupervised learning, reinforcement learning, and federated learning. Supervised learning may mean processing of training a model from an input and a corresponding label. Unsupervised learning may mean processing of training a model without labeled data. Reinforcement learning may mean processing of training a model from an input (i.e., state), a feedback signal (i.e., reward) resulting from the model's output (i.e., action) in an environment with which the model interacts.

In the present disclosure, terms such as generation, calculation, derivation, and so on may be interchangeably interpreted. In the present disclosure, terms such as implementation, operation, action, execution, and so on may be interchangeably interpreted. In the present disclosure, terms such as training, learning, updating, retraining, and so on may be interchangeably interpreted. In the present disclosure, terms such as inference, after-training, production use, actual use, and so on may be interchangeably interpreted. In the present disclosure, a signal and a signal/channel may be interchangeably interpreted.

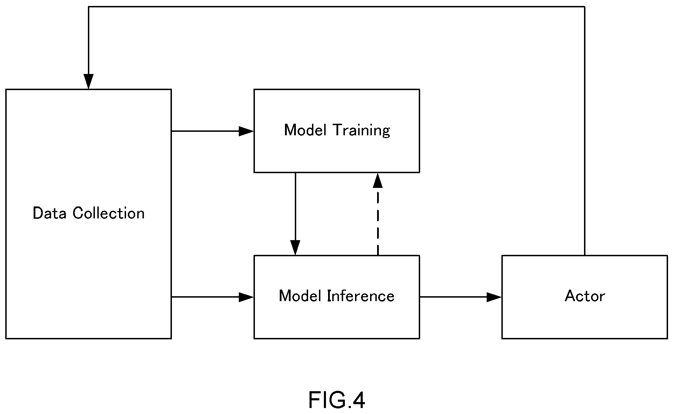

FIG. 4 is a diagram illustrating an example of a framework for managing an AI model. In the present example, stages related to the AI model are illustrated as blocks. The present example is also represented as life cycle management (LCM) of the AI model.

A data collection stage corresponds to a phase in which data for generating/updating the AI model is collected. The data collection stage may also include data organization (for example, determining which data to transfer for model training/model inference) and data transfer (for example, transferring data to an entity (UE or gNB, for example) that performs model training/model inference).

Note that the data collection may mean processing in which data is collected by a network node, management entity, or UE for the purpose of AI model training/data analysis/inference. In the present disclosure, processing and procedure may be interchangeably interpreted. In the present disclosure, the collection may mean acquiring a dataset (for example, usable as input/output) for AI model training/inference based on measurements (channel measurements, beam measurements, radio-link-quality measurements, position estimation, or the like).

In the present disclosure, offline field data may be data that is collected from the field (real world) and used for offline training of an AI model. Further, in the present disclosure, online field data may be data that is collected from the field (real world) and used for online training of an AI model.

In the model training stage, model training is performed based on data (training data) transferred from the collection stage. The stage may include data preparation (for example, performing data preprocessing, cleaning, formatting, or transformation), model training/validation (verification), model testing (for example, checking whether the trained model meets performance thresholds), model exchange (for example, transferring the model for distributed learning), and model deployment/update (deploying/updating the model to an entity that performs model inference).

Note that AI model training may mean processing of training an AI model in a data-driven manner to acquire a trained AI model for inference.

AI model validation may mean sub-processing of training for evaluating the quality of an AI model using a dataset different from the dataset used to train the model. The sub-processing is useful for selecting model parameters that generalize beyond the dataset used to train the model.

AI model testing may mean sub-processing of training for evaluating the performance of the final AI model using a dataset different from the dataset used for model training/validation. Note that, unlike validation, testing does not necessarily require subsequent model tuning.

In the model inference stage, model inference is performed based on the data (inference data) transferred from the collection stage. The stage may include data preparation (for example, performing data preprocessing, cleaning, formatting, or transformation), model inference, model monitoring (for example, monitoring the performance of model inference), model performance feedback (providing feedback on the model performance to the entity that performs the model training), and output (providing a model output to an actor).

Note that AI model inference may mean processing for producing a set of outputs from a set of inputs using a trained AI model.

A UE side model may mean an AI model whose inference is performed entirely in the UE. A network side model may mean an AI model whose inference is performed entirely in the network (for example, gNB).

A one-sided model may mean a UE side model or a network side model. A two-sided model may mean a pair of AI models where joint inference is performed. Here, joint inference may include AI inference where the inference is performed jointly across the UE and the network. For example, a first part of the inference may be performed first by the UE and the remaining part may be performed by the gNB (or vice versa).

AI model monitoring may mean processing for monitoring the inference performance of an AI model, and may be interchangeably read as model performance monitoring, performance monitoring, and so on.

Note that model registration may mean making a model executable (registering) by assigning a version identifier to the model and compiling it into a specific hardware used in the inference stage. Model deployment may mean distributing a runtime image of a fully developed and tested model (or image of the execution environment) to a target (for example, UE/gNB) where inference is performed (or mean enabling at the target).

An actor stage may include an action trigger (for example, determining whether to trigger an action on another entity) and feedback (for example, feeding back information necessary for training data/inference data/performance feedback).

Note that, for example, model training for mobility optimization may be performed, for example, in operation, administration and maintenance (management) (OAM) in a network (NW)/gNodeB (gNB). In the former case, interoperability, large-capacity storage, operator manageability, and model flexibility (such as feature engineering) are advantageous. In the latter case, the latency of model updates and the absence of data exchange for model deployment are advantageous. The model inference may be performed in a gNB, for example.

Note that model activation may mean enabling an AI model for a specific function. Model deactivation may mean disabling an AI model for a specific function. Model switching may mean deactivating the currently active AI model for a specific function and activating a different AI model.

Model transfer may mean distributing an AI model over an air interface. The distribution may include distributing either one or both of parameters of a model structure already known at the receiving end and a new model having parameters. The distribution may include a complete mode or a partial model. Model download may mean model transfer from a network to a UE. Model upload may mean mode transfer from a UE to a network.

### (6G Requirements)

For 6G, several requirements are under consideration, as outlined below.
- Ultra wideband communication Ultra high speed and large capacity communication
- Mission critical communication Ultra high reliable communication
- Ultra massive connection Ultra high connection
- Universal coverage Ultra extended coverage
- Intelligent connection
- Ubiquitous sensing
- New use case Ultra low latency

In addition to the objectives described above, several new concepts can also be targeted.
- Extensible, for example, to ensure greater future viability
- Customizable, for example, to make operation easier
- Sustainable, for example, to reduce cost and enhance robustness

### (Analysis)

It is unclear how a radio communication system contributes to the components of sustainability (for example, environment, economy, and society). As one factor for contributing to the environment, reducing power consumption of a NW/UE may be considered. However, the reduction of power consumption in the radio communication system has not been sufficiently investigated.

In 6G, the introduction of radio sensing, which measures the position and shape of an object using radio waves without placing physical devices or sensors, is under consideration. On the other hand, the use of positioning technology such as GNSS, wireless LAN, short-range wireless communication is limited. For example, in GNSS, there are issues such as concerns about indoor use and low accuracy in the height direction. With advances in positioning and radio sensing technologies, a social infrastructure will be established in which precise location information including height can be provided ubiquitously regardless of location, whether indoors or outdoors, which enables network functions that are premised on such location information.

One possible method for utilizing a large amount of location information data is AI/ML. A function for utilizing AI/ML in a radio communication system is under consideration. For example, functional expansion of self organizing network (SON) that assumes AI/ML is under consideration.

For reduction of UE power consumption, the following several technologies are defined.
- Hardware reduction: For example, reduction in the number of antennas, reduction in bandwidth, introduction of half-duplex FDD, and so on.
- Reduction in processing load: For example, introduction of UE with limited capabilities such as peak rate and bandwidth (low category in LTE, reduced capability (RedCap) in NR), dynamic optimization of some capabilities (dynamic reduction in the number of multi-input multi-output (MIMO) layers), and so on.
- Improvement in efficiency of PDCCH monitoring operation (transition to sleep state, and so on): For example, discontinuous reception (DRX), wake-up signal (WUS), paging early indication (PEI), and so on.
- Improvement in efficiency of existing operations to reduce power consumption: For example, early data transmission (EDT) in LTE, small data transmission (SDT) in NR, and so on.

A WUS is a simple signal for notifying in advance whether a specific UE operation such as PDCCH monitoring is necessary. A UE can detect in advance that a specific UE operation is unnecessary, and by omitting the specific UE operation, UE power consumption can be reduced. A WUS has been introduced in LTE and NR, and a plurality of functions is supported such as for IDLE/INACTIVE mode and CONNECTED mode.

The PEI is to notify an UE in advance whether a paging message is present. If there is no paging message addressed to the UE, the UE power consumption can be reduced by omitting synchronization of time/frequency necessary to receive a paging message, receive paging PDCCH, receive a paging message, and so on.

The EDT is a function of transmitting small size data in the existing RACH operation.

In an area where the UE power consumption reduction technologies described above have not yet addressed, it is conceivable to omit/reduce all or some of operations that have been required in existing specifications. However, methods for omitting/reducing such operations have not been sufficiently examined. If the omission/reduction of operations is inappropriate, it possibly leads to degradation in communication quality/throughput or a reduction in the amount of consumption power reduction.

The inventors of the present invention examined a method for determining a TA, and came up with the idea of an aspect of the present embodiment.

### (Various Interpretations and Others)

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, notify, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, other messages (for example, a message from the core network, such as positioning protocol (for example, NR Positioning Protocol A (NRPPa)/LTE Positioning Protocol (LPP)) messages), and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, a base station, a gNB, and a network (NW) may be interchangeably interpreted.

### (Radio Communication Method)

Since the UL transmission timing depends heavily on the propagation delay between UEs, it depends on the location of the UEs. The UE may utilize information on the location of the UE itself to presume the optimum TA value, and control the TA. This operation may eliminate the need for an NW to control/instruct the TA.

The UE may determine a TA autonomously based on specific prior knowledge. This operation may omit the existing procedure for determining a TA using signal exchange between the UE and the NW based on the actual delay amount. In the method for determining the TA based on specific prior knowledge, an AI/ML with prior learning may be used, or a mathematical model acquired by an AI/ML may be used. For example, the mathematical model may be determined based on data collected in advance, and may be based on a regression line representing the relationship between xyz coordinates of the UE location and the TA.

### <First Embodiment>

### <<System Configuration>>

An inference model in the present disclosure may be a model for predicting a TA to be used in a UE. An ML server in the present disclosure may generate the inference model based on past data (teacher data).

The teacher data for the ML may include at least one of the following three sets of teacher data.
- Teacher data 1: UE measurement information. The data may be used to predict a TA. The UE measurement information may be measured by a UE. The UE measurement information may include at least one set of UE location information indicating the UE location and information about the UE location. The UE location information may include at least one set of UE location (xyz coordinates of the UE), the UE speed, and the UE direction. The information about the UE location may be information that depends on the UE location, or may be information that depends on the distance between a BS and the UE. The information about the UE location may include at least one set of received power (RSRP) measured by the UE, received strength (RSSI) measured by the UE, and information (for example, CSI) on channel measured by the UE.
- Teacher data 2: TA The data may be a measurement value of the TA, or may be measured and stored by the BS. The data may be a target value for a predicted value by an inference model, or may be used to calculate an error of an inference value for the data.
- Teacher data 3: Data other than the teacher data 1 and 2, and information that is the premise for predicting a TA. For example, the data may be a BS location (xyz coordinates of the base station) for calculating the propagation distance from the UE location.

In the present disclosure, the teacher data 1, the UE measurement information, the measurement information, the UE location, the UE location information, and information about the UE location may be interchangeably interpreted. In the present disclosure, the teacher data 2, the TA, the measurement value, and the target value may be interchangeably interpreted.

The inference model may include the influence of at least one of the following: UE location, BS location, line-of-sight or non-line-of-sight communication, number of ranks, and delay profile.

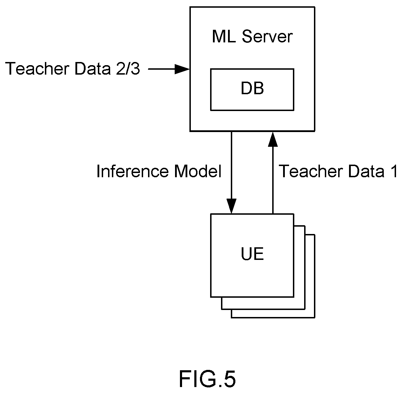

FIG. 5 is a diagram illustrating an example of a method for generating an inference model. One or more UEs may transmit the teacher data 1 to the ML server. The ML server may receive the teacher data 1 from one or more UEs. The ML server may store the teacher data 2 or may receive the teacher data 2 from the BS. The ML server may store the teacher data 3 or may receive the teacher data 3 from the BS. The ML server may generate one or more inference models based on the teacher data. The ML server may transmit one or more inference models to one or more UEs. The ML server may monitor the usage status of the inference model and transmit the result to the UE as monitoring information for correcting the inference model. The monitoring information may be an error between the measured TA (measured value) and the TA (predicted value) predicted by the inference model.

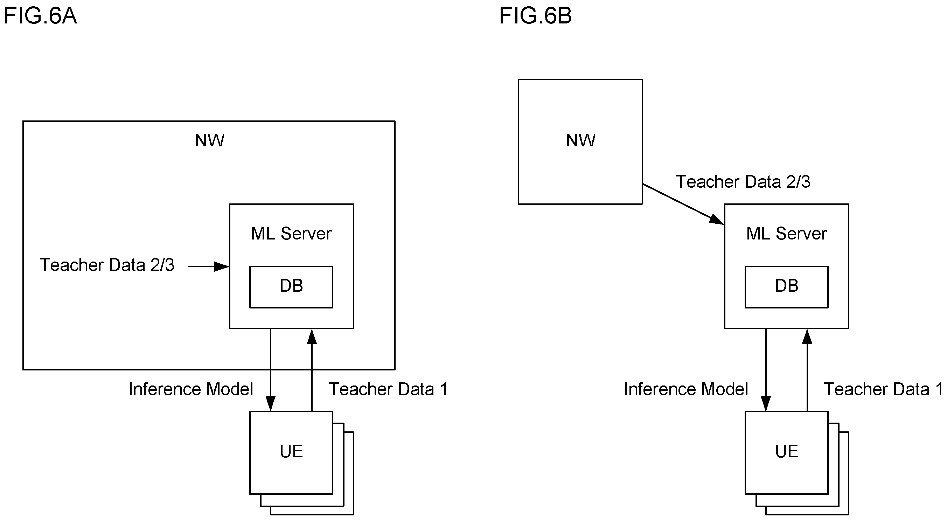

The system configuration may follow any one of the following system configurations:
- System configuration 1: The ML server may be a part of the NW, or may be disposed as a function within the NW. In the example of FIG. 6A, the NW includes the ML server. One or more UEs may transmit the teacher data 1 to the ML server. The ML server may receive the teacher data 2 from the BS. The ML server may generate one or more inference models based on the teacher data. The ML server may transmit one or more inference models to one or more UEs. One or more inference models may each correspond to one or more UEs. One inference model may correspond to one or more UEs.
- System configuration 2: The ML server may be a function external to a RAN including the NW and one or more UEs. In the example of FIG. 6B, the one or more UEs may transmit the teacher data 1 to the ML server. The NW may transmit the teacher data 2 to the ML server. The ML server may generate one or more inference models based on the teacher data. The ML server may transmit one or more inference models to one or more UEs. One or more inference models may each correspond to one or more UEs. One inference model may correspond to one or more UEs.
- System configuration 3: The ML server may be an edge AI or a function of the UE. In other words, the UE may generate an inference model based on the teacher data.

### <<ML-based TA Control>>

In the present disclosure, the existing TA control may be a TA command from the BS to the UE. In the present disclosure, the ML-based TA control may be to determine a TA by the UE autonomously (based on UE measurement information).

The ML-based TA control may include at least one of the following Steps 1-x:
- Step 1-1: The UE may acquire an inference model from the NW or ML server, and use the inference model to determine the TA from the UE measurement information. The inference model may be information representing a mapping (association) between the UE measurement information and the TA. The mapping information may be a table, a database (DB), or a list. The inference model may be a formula for calculating the TA from the UE measurement information. The UE measurement information may be an absolute value (for example, absolute location), and the inference model may calculate the TA from the absolute value. The UE measurement information may be a relative value (for example, relative positional relationship), and the inference model may calculate a relative value of the TA (for example, relative control amount) from the relative value. The UE measurement information may be speed/acceleration of the UE, and the inference model may predict the TA at the UE location after a specific time.
- Step 1-1a: The UE may receive the teacher data 1/3 from the NW or the ML server. The UE may have the function of the ML server and may generate an inference model based on the teacher data 1/2/3. The UE may use the inference model to determine the TA from the UE measurement information. The inference model may be similar to that in Step 1.
- Step 1-2: The UE may notify/report, to the NW, capability information (capability information corresponding to ML-based TA control) indicating that the UE supports the ML-based TA control. The NW may omit some or all of the instructions related to the existing TA control to a UE that has the capability of ML-based TA control (that has reported the capability). This operation can omit regular existing TA control, and can reduce power consumption and signaling overhead related to the existing TA control. The NW may instruct the UE that has the capability of ML-based TA control (that has reported the capability) not to autonomously determine a TA (to perform the existing TA control) permanently or temporarily. For example, if the NW determines that the accuracy of the inference model has deteriorated, the NW may give a TA command to the UE based on the existing TA control. For the UE that has the capability of ML-based TA control (that has reported the capability), the TA validity period for ML-based TA control may be longer than the TA validity period for existing TA control. The TA validity period is the time at which the UE (MAC entity) regards the associated serving cell (for example, the serving cell belonging to the associated TAG) as UL time aligned. The TA validity period for existing TA control may be configured by a time alignment timer (timeAlignmentTimer). If it is not in the TA validity period (if the time alignment timer is not running), the UE (MAC entity) may not be able to perform specific UL transmissions (for example, UL transmissions other than random access procedures). The TA validity period for existing TA control and the TA validity period for ML-based TA control may be configured.
- Step 1-2a: The UE may perform the ML-based TA control in response to reception of information (RRC IE/MAC CE/DCI) indicating the enablement or activation of the ML-based TA control. The UE may stop the ML-based TA control in response to reception of information (RRC IE/MAC CE/DCI) indicating the disablement or deactivation (release) of the ML-based TA control. If the UE stops the ML-based TA control, the existing TA control may be performed. The UE that has reported capability information indicating that it supports the ML-based TA control may receive information indicating the enablement or activation of the ML-based TA control. A UE that has not reported capability information indicating that it supports the ML-based TA control does not have to receive information indicating the enablement or activation of the ML-based TA control. If the NW determines that the accuracy of the inference model has deteriorated, the NW may transmit information indicating the disablement or deactivation of the ML-based TA control and give a TA command to the UE based on the existing TA control.
- Step 1-3: The UE may notify/report, to the NW, information about the TA determined by itself on a regular/periodic basis or on an irregular/non-periodic basis. The information about the TA may include the TA value, may include the UE measurement information, or may include both the TA value and the UE measurement information. The UE may report the information about the TA in response to reception of a report request.

The "deterioration in accuracy of the inference model" in Step 1-2 may be any one of the following events, or may be an AND or OR operation of at least two of the following events.
- A specific number of consecutive errors occurs in the UL within a specific period of time.
- The error rate in the UL within a specific period of time exceeds a specific value.
- The error rate in the UL from a specific UE within a specific period of time exceeds a specific value.
- The magnitude of the error from the optimal value of the TA determined by the UE based on the ML-based TA control exceeds a threshold.

### <<Switching between ML-based TA Control and Existing TA Control>>

The ML-based TA control and the existing TA control may be switched between each other and operated.

If there is no change in the radio wave environment/channel and the inference model is properly constructed, the UE can continue the ML-based TA control (autonomous TA determination), which eliminates the need for the existing TA control (reception of TA command). However, if the radio wave environment has changed significantly since the inference model was constructed (initial construction), it is preferable to update the inference model.

The UE may follow at least one of the following Steps 2-x:
- Step 2-1: The NW may configure/instruct, in the UE, whether the ML-based TA control is enabled using broadcast information (MIB/SIB, and so on)/UE-specific signaling. If the ML-based TA control is enabled and further the ML server is collecting teacher data, the NW may explicitly or implicitly notify the UE that the ML server is collecting teacher data. Whether the ML server is collecting teacher data may be indicated in the operation mode. If the ML-based TA control is enabled and further the ML server is collecting teacher data, the UE may follow one of the following steps 2-1-x.
   -- Step 2-1-1: The UE performs the ML-based TA control based on the UE measurement information measured by the UE.
   -- Step 2-1-2: In addition to Step 2-1-1, the UE transmits the teacher data 1 to the ML server/NW.
   -- Step 2-1-3: The UE performs the existing TA control and transmits the teacher data 1 to the ML server/NW.
- Step 2-2: If the ML-based TA control is disabled, the UE performs the existing TA control (falls back to the existing TA control).
- Step 2-3: In order to monitor/update the inference model regularly/periodically, the NW may temporarily instruct the UE to perform Steps 2-1-2/2-1-3. Some UEs may perform Steps 2-1-2/2-1-3 regularly/periodically.
- Step 2-4: If the NW determines that the accuracy of the inference model has deteriorated, the NW may instruct all or some of the UEs to follow Steps 2-1-2/2-1-3. For example, if the NW determines that the accuracy of the inference model has deteriorated, the NW may determine that the accuracy of the inference model at the location of the UE to which the latest UL resources have been allocated has deteriorated, and may reconstruct/update the teacher data corresponding to the area including the location. For example, if the NW determines that the accuracy of the inference model of a specific UE has deteriorated, the NW may determine that the accuracy of the inference model at the location of that UE has deteriorated, and may reconstruct/update the teacher data corresponding to the area including the location, or may reconstruct/update the teacher data corresponding to that UE. Execution of Steps 2-1-2/2-1-3 by a plurality of UEs may cause a specific radio resource (for example, a RACH occasion) to become overloaded. When instructing the plurality of UEs to follow Steps 2-1-2/2-1-3, the NW may instruct the UEs to use a dedicated radio resource. The UEs may be grouped based on UE IDs, and so on. The NW may instruct, for each UE group, to follow Steps 2-1-2/2-1-3.
- Step 2-5: If the UE determines that the measurement accuracy of the UE measurement information has deteriorated, the UE may perform a step similar to Step 2-4.
- Step 2-6: The UE may perform different UE operations depending on the operation mode. The plurality of modes may be the plurality of steps among the above procedures. For example, while Step 2-1-2 or Step 2-1-3 is performed, the NW may transmit, to the UE, a MAC CE or higher layer signaling (RRC IE) to cause the UE to transmit the teacher data 1. The MAC CE may be included in the signaling to transmit the TA (for example, Msg2 (random access response, RAR) in the RA procedure).

The "deterioration in accuracy of the inference model" in Step 2-4 may be similar to the "deterioration in accuracy of the inference model" in Step 1-2.

The "deterioration in measurement accuracy of UE measurement information" in Step 2-5 may be any one of the following events, or may be an AND or OR operation of at least two of the following events.
- The magnitude of change in the UE measurement information in a specific period of time exceeds a threshold.
- The magnitude of difference between a plurality of UE measurement information determined by a plurality of means exceeds a threshold.
- The magnitude of the error in the UE measurement information determined by a plurality of means exceeds a threshold.

According to this embodiment, the UE/BS can reduce power consumption and signaling overhead related to TA control.

### <Supplements>

### {Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semipersistently, or aperiodically.

### {Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semipersistently, or aperiodically.

### {Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling. The specific condition may indicate at least one of the following:
- at least one of the embodiments above being configured to be enabled.

At least one of the above-described embodiments may be applied only to a UE that has reported a specific UE capability or that supports the specific UE capability. Note that "supporting" and "whether to support" may be interchangeably interpreted. The specific UE capability may indicate at least one of the following:
- UE supporting specific processing/operation/control/information for at least one of the embodiments above.
- UE supporting Ml-based TA control.

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may indicate at least one of the following:
- information indicating that the operation of the embodiment(s) above is enabled/disabled.
- RRC parameter for a specific release (for example, Rel. 18/19). In Rel. YY (for example, YY is 18 or larger), an RRC parameter that enables operation XXX may be expressed as XXX_rYY (XXX-rYY).

When the UE does not support at least one of the specific UE capabilities above or is not configured with the specific information, operation of Rel. 15/16/17 may be applied, for example.

### (Supplementary Notes)

Regarding one embodiment of the present disclosure, the following supplementary notes of the invention will be given.

### {Supplementary Note 1}

A terminal including:
a receiving section that receives control information for determining timing advance; and
a control section that determines the timing advance, based on measurement information measured by the terminal.

### {Supplementary Note 2}

The terminal according to supplementary note 1, wherein
the control information indicates a model for determining the timing advance, and
the control section uses the model, to determine the timing advance, based on the measurement information.

### {Supplementary Note 3}

The terminal according to supplementary note 1 or 2, wherein if the control information indicates that a procedure for determining the timing advance is valid, the control section performs the procedure.

### {Supplementary Note 4}

The terminal according to any one of supplementary notes 1 to 3, wherein if the control information indicates that a procedure for determining the timing advance is invalid, the receiving section receives a command for the timing advance.

### (Radio Communication System)

Hereinafter, a structure of a radio communication system according to one embodiment of the present disclosure will be described. In this radio communication system, the radio communication methods according to the respective embodiments of the present disclosure described above may be used alone or may be used in combination for communication.

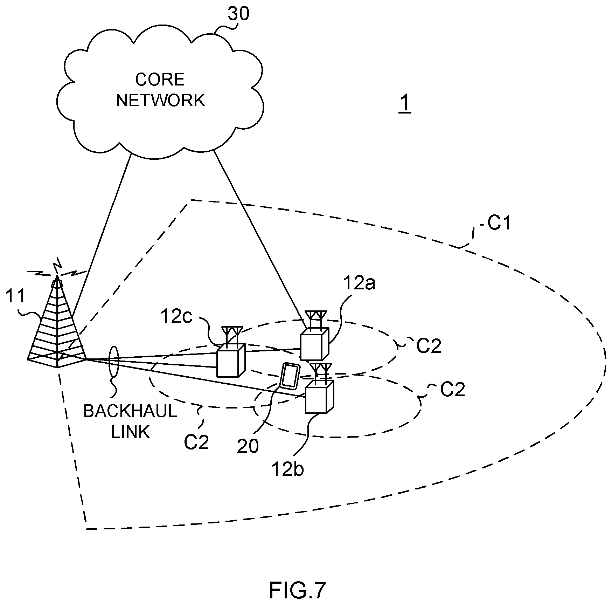

FIG. 7 is a diagram to show an example of a schematic structure of the radio communication system according to one embodiment. The radio communication system 1 (which may be simply referred to as system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cellspecific reference signal (CRS), a channel state informationreference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

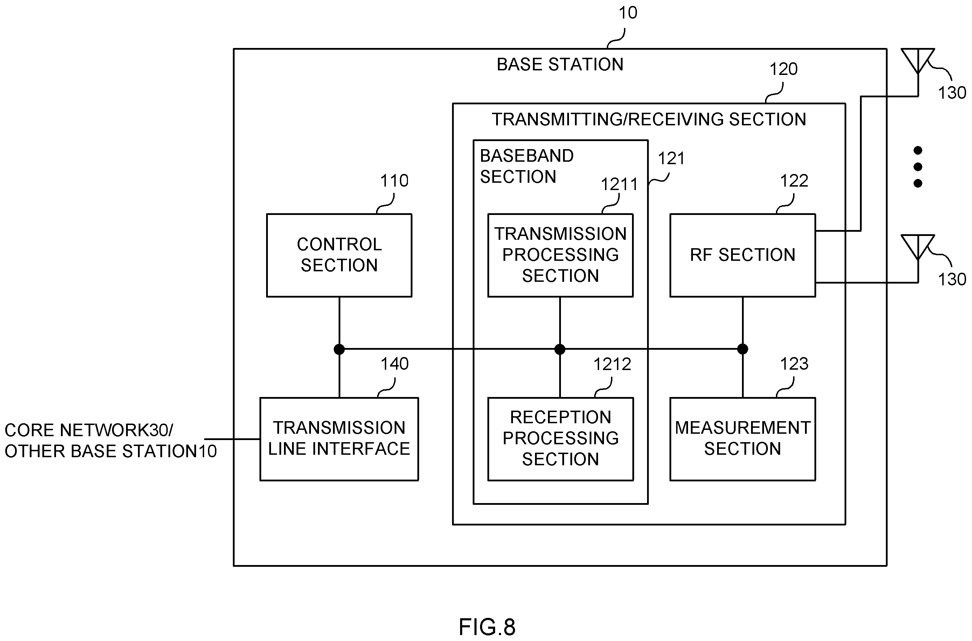

FIG. 8 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analogdigital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit control information for a terminal to determine timing advance. The control section 110 may control reception of an uplink signal using the timing advance determined by the terminal.

### (User Terminal)

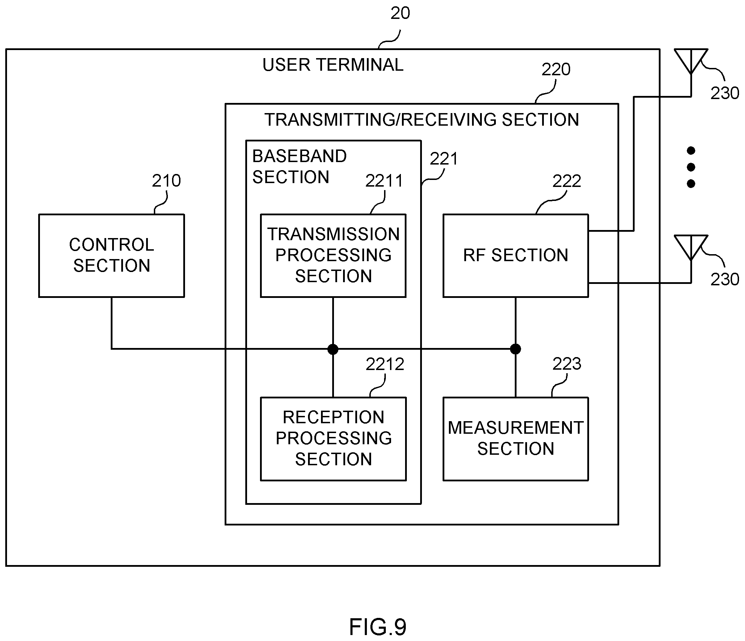

FIG. 9 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analogdigital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a resource for channel measurement. The resource for channel measurement may be, for example, a non zero power (NZP) CSI-RS resource. The measurement section 223 may derive interference measurement for CSI calculation, based on a resource for interference measurement. The resource for interference measurement may be at least one of an NZP CSI-RS resource for interference measurement, a CSI-interference measurement (IM) resource, and the like. Note that CSI-IM may be referred to as CSI-interference management (IM), and may be interchangeably interpreted as zero power (ZP) CSI-RS. Note that, in the present disclosure, the CSI-RS, the NZP CSI-RS, the ZP CSI-RS, the CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The transmitting/receiving section 220 may receive control information for determining timing advance. The control section 210 may determine the timing advance, based on measurement information measured by the terminal.

The control information may indicate a model for determining the timing advance. The control section 210 may use the model, to determine the timing advance, based on the measurement information.

If the control information indicates that a procedure for determining the timing advance is valid, the control section 210 may perform the procedure.

If the control information indicates that a procedure for determining the timing advance is invalid, the transmitting/receiving section 220 may receive a command for the timing advance.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

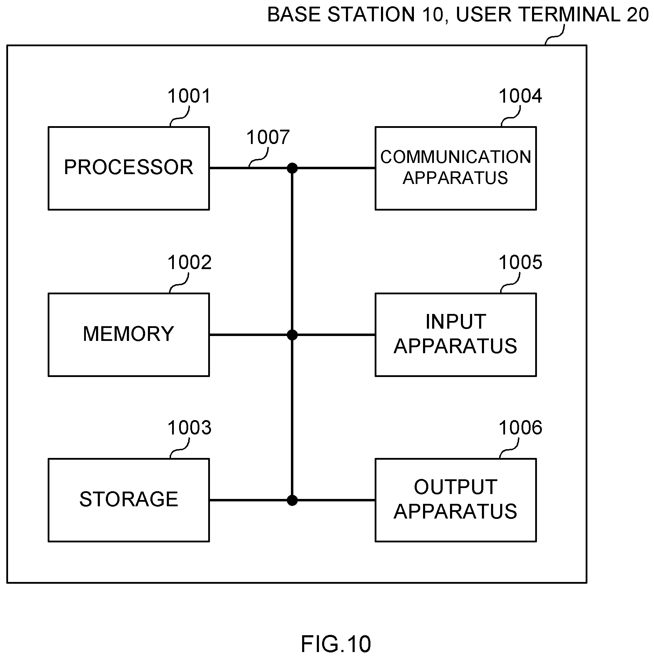

For example, a base station, a user terminal, and so on according to one embodiment of the present disclosure may function as a computer that executes the processes of the radio communication method of the present disclosure. FIG. 10 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a given signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to given values, or may be expressed using another corresponding information. For example, a radio resource may be specified by a given index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names assigned to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of given information (for example, notification of "X") does not necessarily have to be performed explicitly, and can be performed implicitly (by, for example, not reporting this given information or reporting another piece of information).

A decision may be realized by a value (0 or 1) represented by one bit, by a boolean value (true or false), or by comparison of numerical values (e.g., comparison with a given value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

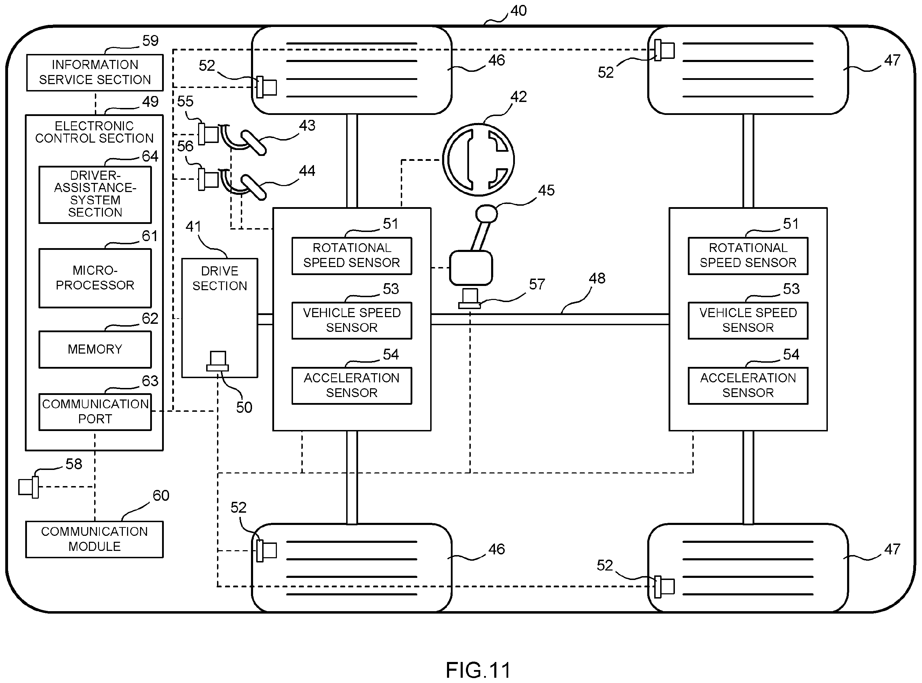

FIG. 11 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various information such as driving information, traffic information, and entertainment information, such as a car navigation system, an audio system, a speaker, a display, a television, and a radio; and one or more ECUs that control these devices. The information service section 59 provides various information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various information received from the external apparatus in the memory 62 that can be used by the microprocessor 61. Based on the information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a toinfinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and noninclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a receiving section that receives control information for determining timing advance; and
a control section that determines the timing advance, based on measurement information measured by the terminal.

2. The terminal according to claim 1, wherein
the control information indicates a model for determining the timing advance, and
the control section uses the model, to determine the timing advance, based on the measurement information.

3. The terminal according to claim 1, wherein if the control information indicates that a procedure for determining the timing advance is valid, the control section performs the procedure.

4. The terminal according to claim 1, wherein if the control information indicates that a procedure for determining the timing advance is invalid, the receiving section receives a command for the timing advance.

5. A radio communication method for a terminal, the radio communication method comprising:
receiving control information for determining timing advance; and
determining the timing advance, based on measurement information measured by the terminal.

6. A base station comprising:
a transmitting section that transmits control information for a terminal to determine timing advance; and
a control section that controls reception of an uplink signal using the timing advance determined by the terminal.
